# EUROPEAN PATENT APPLICATION

(11) **EP 2 169 628 A2**
(43) Date of publication of application: **31.03.2010**
(21) Application number: 09252093.1
(22) Date of filing: 28.08.2009
(51) Int. Cl.: G06T 17/50, G06T 11/20

(54) **Method and system for providing a realistic environment for a traffic report**

(30) Priority: 15.09.2008 US 210336
(71) Applicant: Navteq North America, LLC, Chicago, Illinois 60606 (US)
(72) Inventor: Soulchin, Robert M., King of Prussia, PA 19406 (US); Swope, Howard M., III, Exton, PA 19341 (US); Balcerzak, Michal, Philadelphia, PA 19147 (US); Carnot, Michelle L., Philadelphia, PA 19134 (US); Wieber, Joseph, Easton, PA 18045 (US)
(74) Representative: Palmer, Jonathan R.

(57) **Abstract**

A method and system for providing a realistic environment for a traffic report is disclosed. The traffic report includes a 3D view of current traffic conditions for one or more roadways in and around a metropolitan area. The 3D view includes a background that reflects the current time of day and/or weather conditions. For example, a traffic report shown by a television station as part of the evening news may depict the background as having a dark sky and nighttime lighting, such as vehicle, building, and street lights. As another example, a traffic report shown by a television station as part of the noon news may depict the background as having overcast skies.

## Description

### FIELD

The present invention relates generally to providing traffic reports, and more particularly, relates to providing a more realistic environment for a traffic report.

### BACKGROUND

Most drivers have been impacted by traffic delays. Traffic delays are caused by one or more traffic incidents, such as congestion, construction, an accident, a special event (e.g., concerts, sporting events, festivals), a weather condition (e.g., rain, snow, tornado), and so on. Many television stations provide a traffic report in their news reports to provide viewers with information regarding current traffic conditions. Some television stations use graphics when presenting traffic information.

For example, U.S. Patent No. 7,116,326, which is assigned to the same assignee of the present application, describes how a television station can display a traffic flow map that visually shows an animated graphic of the traffic conditions on one or more roadways in and around a metropolitan area. The traffic flow map is automatically generated from real-time traffic flow data and changes as the actual, current traffic conditions change.

While these animated graphics allow a user to more easily comprehend the current traffic conditions, there continues to be room for new features and improvements in providing traffic reports. One area for improvement is providing a more realistic scene of the area being depicted in the traffic report. With a more realistic scene, viewers of the traffic report may comprehend the current traffic conditions more easily.

### SUMMARY

A method and system for providing a realistic environment for a traffic report is disclosed. A user, such as a television producer, selects an appearance of the environment to be used with the traffic report. The user may select the appearance based on the time of day and/or weather conditions. Alternatively, the appearance may be automatically selected using a clock and/or a weather feed.

The appearance can be modified by changing the sky background images, cloud patterns, and/or lighting conditions. Additionally, when a nighttime or stormy environment is selected, the appearance of the environment can be modified to depict vehicle headlights, building lights, street lights, bridge lights, and other lighting viewable in a dark environment. Additional graphics, such as a sun for sunny scene and a moon for nighttime scene, can also be added to the environment to provide a more realistic appearance.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

### BRIEF DESCRIPTION OF THE DRAWINGS

Presently preferred embodiments are described below in conjunction with the appended drawing figures, wherein like reference numerals refer to like elements in the various figures, and wherein:
Figure 1 is a block diagram of a system for providing a traffic report, according to an example;
Figure 2 is a screen shot depicting traffic conditions, according to an example;
Figure 3 is a screen shot depicting traffic conditions, according to another example; and
Figure 4 is a flow chart for providing a traffic report depicting a realistic environment, according to an example.

### DETAILED DESCRIPTION

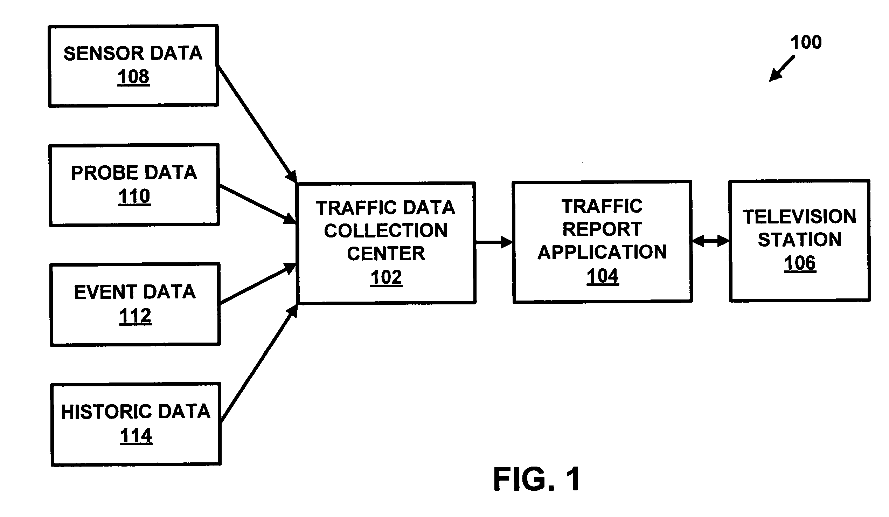

Figure 1 is a block diagram of a system 100 for providing a traffic report. The system 100 includes a traffic data collection center 102 and a traffic report application 104. The traffic data collection center 102 receives data regarding traffic conditions from a variety of sources and provides a traffic data output to the traffic report application 104. The traffic report application 104 uses the traffic data output along with user inputs to generate a video output for a traffic report that can be used by a television station 106 or other end user, such as a web-based or cellular-based application, to present information regarding current traffic conditions to viewers.

The traffic data collection center 102 receives sensor data 108, probe data 110, and/or event data 112. The sensor data 108 is data collected from roadway sensors. The sensors may use radar, acoustics, video, and embedded loops in the roadway to collect data that can be used to characterize traffic conditions. For example, the sensor data 108 may include speed, volume (number of vehicles passing the sensor per period of time), and density (percentage of the roadway that is occupied by vehicles). The sensor data 108 may include other data types as well, such as vehicle classification (e.g., car, truck, motorcycle). The sensor data 108 is generally collected in real time (i.e., as it occurs) or at near real time.

The probe data 110 is point data collected from a moving vehicle having a device that can identify vehicle position as a vehicle travels along a road network. For example, the device may use cellular technology or Global Positioning Satellite (GPS) technology to monitor the vehicle's position on the road network. By monitoring the vehicle's movement, the probe data 110 can be used to determine travel time, which can then be used to calculate speed of the vehicle. The probe data 110 is generally collected in real time or at near real time.

The event data 112 is traffic data regarding a traffic event. A traffic event is an occurrence on a road system that may impact the flow of traffic. Traffic events include incidents and weather. An incident is a traffic event that obstructs the flow of traffic on the road system or is otherwise noteworthy in reference to traffic. Example incidents include accidents, congestion, construction, disabled vehicles, and vehicle fires.

A traffic operator may enter the event data 112 into a Traffic Incident Management System (TIMS), such as the TIMS described in U.S. Patent Publication No. 2004/0143385, which is assigned to the same assignee as the current application. U.S. Patent Publication No. 2004/0143385 is hereby incorporated by reference in its entirety. A traffic operator is a person who gathers traffic information from a variety of sources, such as by monitoring emergency scanner frequencies, by viewing images from cameras located adjacent to a roadway, and by calling government departments of transportation, police, and emergency services. In addition, the traffic operator may obtain traffic data from aircraft flying over the road network.

The traffic operator may enter event data 112 using TIMS edit screens, which present the traffic operator with a menu to select the type of information entered for a particular type of incident. The TIMS uses a series of forms to prompt the traffic operator for relevant information to be entered. The forms and fields used depend on the type of traffic information to be entered and what type of information is available. For example, the traffic information entered by the traffic operator may be related to weather, an accident, construction, or other traffic incident information.

The traffic data collection center 102 may also have access to historical traffic data 114. The historical traffic data 114 may include travel time, delay time, speed, and congestion data for various times of the day and days of the week. The traffic data collection center 102 may use the historical traffic data 114 to predict clearance time for a traffic event, to predict traffic conditions when sensor data 108, probe data 110, and/or event data 112 is unavailable for a particular roadway, or for any other suitable purpose.

The traffic data collection center 102 includes a combination of hardware, software, and/or firmware that collects the received sensor, probe, event, and historical traffic data 108-114, analyzes the data 108-114, and provides a traffic data output to applications that use traffic data. For example, the traffic data collection center 102 may be a virtual geo-spatial traffic network (VGSTN) as described in U.S. Patent Publication No. 2004/0143385. Other systems for collecting, analyzing, and providing traffic data in a format that can be used by applications may also be used.

The traffic data collection center 102 analyzes sensor data 108 and probe data 110 to determine whether congestion is building, steady, or receding on a roadway. Additionally, the traffic data collection center 102 integrates the sensor data 108 and probe data 110 with the collected event data 112. The integrated data is mapped using a geographic database to produce a virtual traffic network representing traffic conditions on a road network. In one embodiment, the geographic database is a geographic database published by NAVTEQ North America, LLC of Chicago, Illinois.

The traffic data collection center 102 provides a traffic data output to the traffic report application 104. The traffic data output may be a traffic feed, such as an RSS or XML feed. The traffic report application 104 uses the traffic data output and inputs from a user to create a video output for a traffic report that can be used by the television station 106. For example, the traffic report application 104 may be the NeXgen television traffic reporting application as described in U.S. Patent Publication No. 2006/0247850, which is assigned to the same assignee as the current application. U.S. Patent Publication No. 2006/0247850 is hereby incorporated by reference in its entirety. Other applications that can create a traffic report using traffic data may also be used.

The NeXgen application uses the traffic data output to create data-driven maps and informational graphics of traffic conditions on a road system for display on a video device. With the NeXgen application, traffic maps and informational graphics do not need to be pre-rendered into movies, thus providing a dynamic view of traffic data on a road system. Specifically, two-dimensional (2D) and three-dimensional (3D) traffic maps and informational graphics change as traffic data changes in real or near real time. Also, with the NeXgen application, the traffic report is dynamically created to illustrate the traffic data that the user selects.

While the traffic report application 104 is depicted in Figure 1 as a stand-alone entity, it is understood that the traffic report application 104 may be co-located with either the traffic data collection center 102 or the television station 106. Additionally, the output from the traffic report application 104 may be provided to end users other than the television station 106. For example, the traffic report application 104 may provide the traffic report to a web-based application or a cellular application.

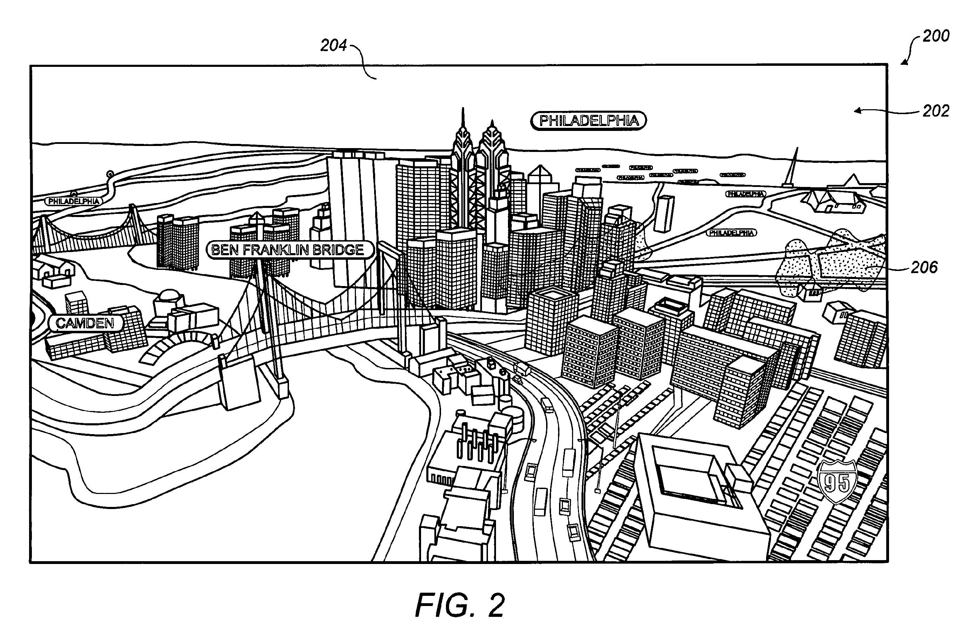

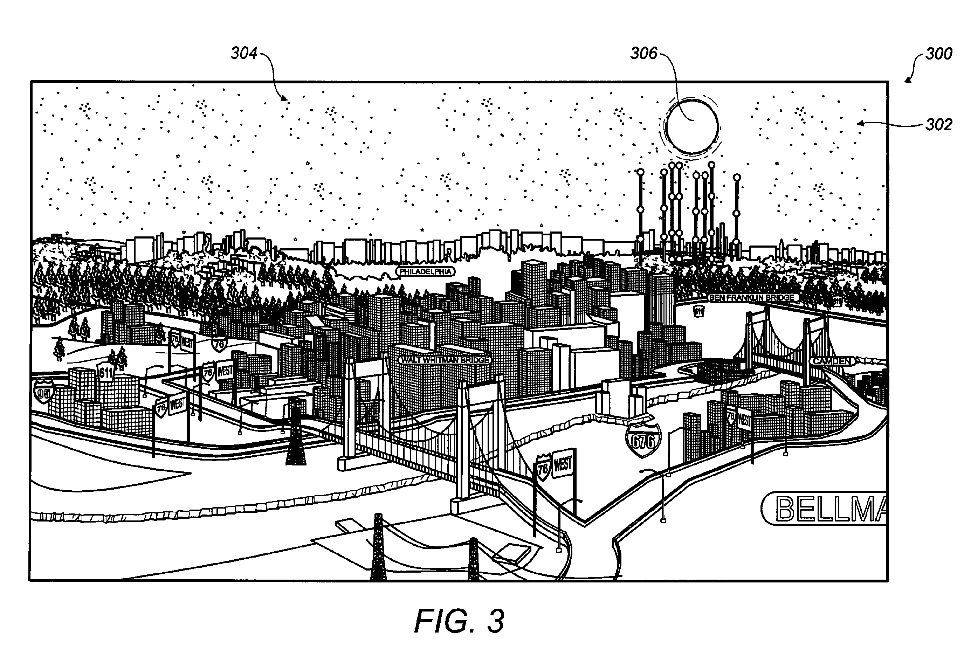

Figure 2 is a screen shot 200 depicting a 3D view of traffic conditions in a city during the day. Figure 3 is a screen shot 300 depicting a 3D view of traffic conditions in a city at night. The screen shots 200, 300 are examples of a single image from a traffic report that may be generated by the traffic report application 104 and presented by the television station 106.

The screen shot 200 includes a sky area 202 and the screen shot 300 includes a sky area 302, each of which surround the buildings, roads, vehicles, and other objects in the image of the city. In reality, the sky's lighting and color changes according to viewing direction, the position of the sun, and conditions of the atmosphere. To provide a realistic traffic report environment, the traffic report application 104 adjusts the sky areas 202, 302 to more closely match the how the lighting and color of the sky changes over time.

The traffic report application 104 may adjust the sky areas 202, 302 based on time of day. For example, the time of day may be segmented into dawn, daytime, dusk, and nighttime. The traffic report application 104 may adjust the light intensity and color of the sky area 202, 302 for each of these time segments based on lighting and sky color conditions expected in the real world at that time. The daytime scene may have full lighting with a sky color of light blue. The nighttime scene may have minimal lighting with a dark sky color, such as black, dark blue, or dark purple. The dawn and dusk scenes may have lighting that ranges between the full lighting of the daytime scene and the minimal lighting of the nighttime scene. The color of the sky area 202, 302 in the dawn or dusk scenes may vary based on the colors expected at that time. For example, the dawn scene may have a sky color with a pinkish hue, while the dusk scene may have sky color with an orange hue.

Additionally or alternatively, the traffic report application 104 may adjust the sky areas 202, 302 based on weather conditions. The traffic report application 104 may adjust the sky areas 202, 302 based on cloud cover, rain, snow, fog, and other weather conditions that can change the color and lighting of the sky in the real world. For example, if the weather is currently stormy, the light intensity and color of the sky areas 202, 302 may be adjusted to be darker than if the weather is clear. Other adjustments to the sky areas 202, 302 may also be made based on weather conditions.

Prior to the traffic report application 104 adjusting the sky areas 202, 302, an artist may use a graphics application, such as commercially available Autodesk^{®} 3ds Max^{®} (formerly 3D Studio MAX), to generate the sky areas 202, 302. Another application, such as Gamebryo, may be used to create a runtime graphics data file (e.g., a .nif file) used by the traffic report application 104 to create the video output sent to the television station 106 or other end user.

The artist may create the sky areas 202, 302 using a dome. The artist selects a light source to illuminate the sky dome. The artist varies the lighting intensity and color of the light source to change the environment color reflecting the expected real world color and light intensity of the sky at different times of the day. The light source reflects off objects in the scene, such as buildings, bridges, and vehicles. In this manner, the light source affects objects in the scene much like sunlight in the real world.

The artist may also change environment colors by changing texture of the objects in the scene. The textures are the images applied to objects to make 3D geometry (e.g., boxes and rectangles) look like buildings. In this example, the light source provides a consistent light, typically a bright white light. The textured images are altered to receive the color hues, such as the orange hues used in the dusk scene. The artist may use an image editing program, such as Photoshop, to alter the textures of the objects.

As another example, the artist may change the environment color by changing the underlying material colors of each object in a scene. In this example, the light source and textures are not altered. Instead, the material color of each object is altered. The material is a set of properties that affect the appearance of an object. The material contains the main texture image and allows for setting other textures and properties. For example, other texture images can be used to add reflectivity, areas of transparency, and/or the appearance of a bumpy surface.

The materials can also contain several color properties, such as diffuse color, specular color, and emittance color. The diffuse color is the object's base color. When a texture is applied to an object, the diffuse color affects how the texture is displayed. The specular color is the color of highlights. Usually, the specular color is white, but can be other colors as well. When light shines on a glossy object, certain areas have brighter spots. The specular color alters the color of these brighter spots. The emittance color is the "glow" color that makes an object look like its being illuminated from inside the object. Changing these underlying colors may affect the appearance of the objects in the scene without adjusting the lights or the texture images. For example, changing the environment color for a dusk scene may include changing the diffuse, specular, and emittance colors to an orange hue, making the object appear to have an orange glow.

Other methods may be used to change the environment color. For example, the graphics application may allow an artist to import actual weather data to simulate outdoor lighting. The artist may also add clouds 204 and/or stars 304 to the sky dome.

The traffic report application 104 may add graphics 206, 306 to the sky areas 202, 302 based on time and/or weather conditions. Prior to the traffic report application 104 adding graphics 206, 306 to the sky areas 202, 302, the artist may use the graphics application to generate the graphics 206, 306. For example, the sun, the moon, clouds, fog, lightening bolts, rain drops, rainbows, tornados, and other objects that may be seen in the real sky may be added to the sky areas 202, 302. As described, two types of clouds may be added to the virtual world. The clouds 204 are added to the background of the sky dome, while the clouds 206 are added as 3D objects in a scene. In a similar manner, stars can be added to the background of the sky dome and/or as 3D objects in a scene.

The added objects may also be adjusted as conditions change. For example, as a storm approaches, the cloud objects may increase in size and darken in color. As another example, to simulate fog, a cloud object may be adjusted to create one big cloud producing low visibility in the scene. The added graphics may be positioned in the image at a location that represents the location of the objects in the actual sky (e.g., sun located in the east in the dawn view). Additionally, the added graphics may reflect the actual size, shape, and/or color of the objects in the actual sky (e.g., full moon, cumulus clouds, stratus clouds).

The traffic report application 104 may also add graphics to the objects in the city and alter graphics added to the city objects as conditions change. For example, as seen in the nighttime scene depicted in Figure 3, lights may be added to or altered on a vehicle graphic to simulate headlights, tail lights, and dome lights. As another example, the traffic report application 104 may add or alter graphics depicting street lights, bridge lights, and building lights to the city objects in the nighttime or stormy view. The color of the lights may be selected to match the color of the actual lights.

Additionally, the traffic report application 104 may add audio to the background of the traffic report to reflect the time of day or current weather conditions. For example, the background of the traffic report may include the sound of raindrops or thunder. As another example, while presenting the dawn scene, the background of the traffic report may include the sound of birds chirping.

The traffic report application 104 creates the traffic report using the sky areas and graphics created by the artist. The traffic report application 104 may adjust the sky areas 202, 302 or add graphics 206, 306 automatically or based on user input. In an automatic mode, the traffic report application 104 may use a clock to determine the time of day and/or a weather feed to determine weather conditions. The weather feed may be an RSS, XML, or other type of feed provided by a weather service provider, such as the National Weather Service. Based on the time and/or weather, the traffic report application 104 selects the appropriate environment to display during the traffic report.

In a manual mode, the user selects which environment to display during the traffic report. The user may be a television producer or any other person. The traffic report application 104 may provide the television station 106 with a list of options to select, such as Dawn, Sunny, Dusk, Overcast, Stormy, and Night. Based on the user selection, the traffic report application 104 selects the associated environment to display during the traffic report.

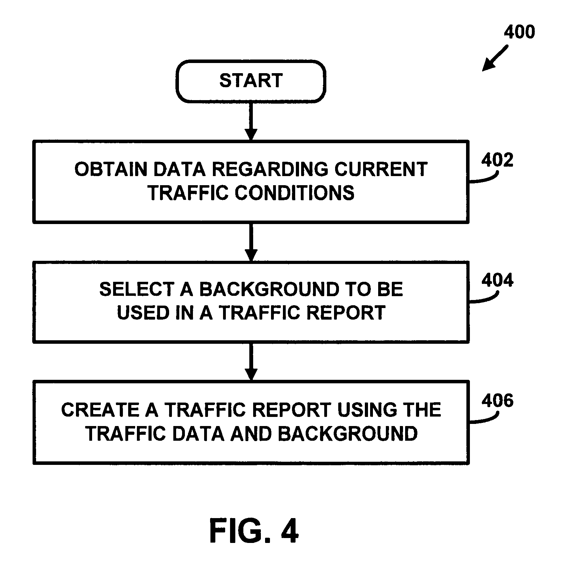

Figure 4 is a flow chart of a method 400 for providing a traffic report depicting a realistic environment. At block 402, the method 400 obtains data regarding current traffic conditions for one or more roadways in a road network. Sensors along the roadway and/or probes in vehicles traveling along the roadway collect current traffic conditions. Additionally or alternatively, traffic operators obtain traffic data from traffic cameras, scanners, and from other people who are aware of traffic incidents. The traffic data received from the various sources are organized and compiled into a form that can be used to provide a traffic data output (e.g., a traffic feed) that can be used by the traffic report application 104.

At block 404, the method 400 selects a background to be used in a traffic report based on time of day and/or weather conditions. Preferably, the background includes sky color and light intensity that simulates current real world sky conditions. The background also includes graphics that represents objects found in the real sky or objects that appear in certain lighting conditions, such as car headlights that a driver activates at night or during stormy conditions. The background may be selected automatically using a clock and/or a weather feed or manually by receiving user input.

At block 406, the method 400 creates a traffic report that includes the current traffic conditions and the selected background. The traffic report includes a traffic flow map that shows current traffic conditions, preferably using a color-coded animation of vehicles moving along a roadway. The animation is representative of the current speed, volume, and density of the current traffic conditions along the roadway. For example, cars depicted on a segment of the traffic flow map may move at a rate representative of the actual roadway speed for the segment. Additionally, the number of cars may represent the actual volume of cars on the segment and the color of the cars may represent the actual density of the segment.

The traffic report may include a series of images depicting 2D and/or 3D views of the area surrounding the roadway. When the traffic report depicts a 3D view, the corresponding images may include an area representing the sky. The traffic report depicts the sky area in a manner that reflects real world sky conditions by using the selected background.

The traffic report is provided to the television station 106, to web-based applications, to cellular applications, and so on. Viewers of the traffic report see a more realistic representation of the area depicted in the report. As a result, the viewers may have a better sense of connection to the real world, making the traffic reports easier to understand. Moreover, a user has the ability to present the same traffic data in many different ways providing a more interesting and topical report.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A method for providing a realistic environment for a traffic report that includes a visual depiction of a geographical area including a portion of a road network located therein, comprising:
obtaining data regarding traffic conditions on at least one roadway in the portion of the road network;
selecting an environment for the geographic area depicted in the traffic report based on at least one of time of day and weather conditions; and
creating the traffic report including the visual depiction using the obtained data and the selected environment.

2. The method of claim 1, wherein selecting the environment includes selecting lighting of the environment based on the time of day.

3. The method of claim 1, wherein selecting the environment includes selecting color of the environment based on the time of day.

4. The method of claim 1, further comprising adding graphics to the environment based on the time of day.

5. The method of claim 1, wherein selecting the environment includes selecting lighting of the environment based on the weather conditions.

6. The method of claim 1, wherein selecting the environment includes selecting color of the environment based on the weather conditions.

7. The method of claim 1, further comprising adding graphics to the environment based on the weather conditions.

8. The method of claim 1, wherein selecting the environment includes an automatic selection of the environment.

9. The method of claim 1, wherein selecting the environment includes a user selecting the environment.

10. A system for providing a realistic environment for a traffic report that includes a visual depiction of a geographical area including a portion of a road network located therein, comprising:
a traffic data collection center that receives data regarding traffic conditions on at least one roadway in the portion of the road network and generates a traffic data output; and
a traffic report application that receives the traffic data output from the traffic data collection center, wherein the traffic report application selects a sky area appearance based on time of day or weather conditions and creates a traffic report including the visual depiction based on the traffic data output and the selected sky area appearance.

11. The system of claim 10, wherein the traffic report application selects lighting for the sky area appearance.

12. The system of claim 10, wherein the traffic report application selects color for the sky area appearance.

13. The system of claim 10, wherein the traffic report application adds graphics to the traffic report based on the selected sky area appearance.

14. A computer program which, when executed by a computer, carries out a method according to any one of claims 1 to 9.
